# EUROPÄISCHE PATENTANMELDUNG

(11) **EP 1 600 356 A2**
(43) Veröffentlichungstag der Anmeldung: **30.11.2005**
(21) Anmeldenummer: 05103678.8
(22) Anmeldetag: 03.05.2005
(51) Int. Cl.: B62D 5/00, B62D 6/00

(54) **Lenksystem**

(30) Priorität: 28.05.2004 DE 102004026184
(71) Anmelder: ZF Lenksysteme GmbH, 73527 Schwäbisch Gmünd (DE)
(72) Erfinder: Hudelmaier, Gebhard, D-73563 Mögglingen (DE); Wahl, Gernot, D-73529 Schwäbisch Gmünd (DE); Staudenmaier, Claus, D-73072 Donzdorf-Reichenbach u. R. (DE); Widmaier, Holger, D-73432 Aalen (DE)

(57) **Zusammenfassung**

Die Erfindung betrifft ein Lenksystem (1) für ein Fahrzeug (2), insbesondere für ein Kraftfahrzeug, mit einer Einrichtung (3) zur Änderung des Lenkwinkelverhältnisses (δ_{IN}/δ_{OUT}) zwischen einem, an einer Lenkhandhabe (4) eingegebenen Lenkwinkel (δ_{IN}) und einem Lenkwinkel (δ_{OUT}) eines lenkbaren Rades (5) und/oder mit einer Einrichtung zur Änderung des Unterstützungslenkmoments mit einer Steuereinrichtung (6) für die Einrichtung (3) zur Änderung des Lenkwinkelverhältnisses (δ_{IN}/δ_{OUT}) oder des Unterstützungslenkmoments, wobei die Steuereinrichtung (6) Signale (n_{R}) eines Drehzahlsensors (7) an einem Rad des Fahrzeugs (2) oder eines Fahrgeschwindigkeitssensors und Signale (δ_{IN}) eines Lenkwinkelsensors (8) an der Lenkhandhabe (4) verarbeitet.

Um ein Lenksystem zu schaffen, das weniger empfindlich auf Lenkwinkeländerungen an der Lenkhandhabe bei Rückwärtsfahrt reagiert und ein leichtes und sicheres Rückwärtsfahren ermöglicht, ist vorgesehen, dass durch die Steuereinrichtung (6) der Einrichtung (3) zur Änderung des Lenkwinkelverhältnisse (δ_{IN}/δ_{OUT}) oder des Unterstützungslenkmoments ein Signal (d_{F}) eines Fahrtrichtungssensors (9) verarbeitet wird und das Lenkwinkelverhältnis (δ_{IN}/ δ_{OUT}) und/oder das Unterstützungslenkmoment bei Rückwärtsfahrt des Fahrzeugs (2) geregelt wird.

## Beschreibung

Die Erfindung betrifft ein Lenksystem für ein Fahrzeug, insbesondere für ein Kraftfahrzeug, nach dem Oberbegriff des Anspruches 1.

Bekannte Lenksysteme von Fahrzeugen, die als mechanische, elektrische, elektrohydraulische, hydraulische Lenksysteme, Hilfskraft- oder Fremdkraftlenksysteme ausgebildet sind, weisen unterschiedlichste Ausführungsarten von Einrichtungen zur Änderung des Lenkwinkelverhältnisses, also des Verhältnisses von einem an einer Lenkhandhabe eingegebenen Lenkwinkel zu dem an einem lenkbaren Rad des Fahrzeugs sich einstellenden Lenkwinkel oder Einrichtungen zur Änderung des Unterstützungslenkmoments eines Lenkaktuators auf.

Die DE 41 29 731 C2 beschreibt ein Lenksystem mit variablem Lenkwinkelverhältnis für ein Kraftfahrzeug, wobei eine mit einem Lenkrad gekoppelte Eingangswelle einen ersten Gewindeabschnitt aufweist, der mit einer Kugelmutterumlaufeinrichtung in Gewindeeingriff steht. Eine getrieblich mit lenkbaren Rädern des Kraftfahrzeugs gekoppelte Ausgangswelle weist einen zweiten Gewindeabschnitt auf. Das Lenksystem weist eine koaxial zu der Eingangswelle und der Ausgangswelle angeordnete Lenkwinkelverhältnis - Einstelleinrichtung auf, die mit dem ersten und zweiten Gewindeabschnitt über eine zweite Mutter in Eingriff steht. Die Lenkwinkelverhältnis - Einstelleinrichtung variiert das Verhältnis der linearen Bewegung der ersten Mutter zu der zweiten Mutter. Die Veränderung des Lenkwinkelverhältnisses ist fahrgeschwindigkeitsabhängig.

Die DE 40 03 981 A1 beschreibt eine Lenkwinkelverhältnis - Wechselvorrichtung zum Ändern des Einschlages von Fahrzeugrädern der nach Maßgabe eines Drehwinkels eine Lenkrades eines Fahrzeugs erzeugt wird, mit einer ersten Lenkspindel, die mit einem Lenkrad drehfest verbunden ist und einer zweiten Lenkspindel, die mit einem Lenkgetriebe verbunden ist und im wesentlichen koaxial mit der ersten Lenkspindel angeordnet ist und drehbar ist. Die Lenkspindeln sind mit einem Drehstab verbunden. Es sind in der Verzweigung der Lenkspindeln Klauen bildende axiale Spalte vorgesehen, mit denen die Lenkspindeln ineinander greifen und relativ zueinander verdrehbar sind. In den Spalten sind Stellmittel vorgesehen mit denen die Breite der Spalte eingestellt werden kann womit eine Rotation der Lenkspindeln relativ zueinander möglich ist.

Die US 6 101 435 beschreibt eine elektrohydraulische Lenkung mit einer von einem Elektromotor angetriebenen Hydropumpe, deren Drehzahl und Fördermenge in Abhängigkeit von der Fahrgeschwindigkeit, dem aktuellen Lenkwinkel und der Fahrzeuggierrate verändert werden kann. Es sind zwei automatisch einstellbare Betriebsweisen - Parkierbetrieb und Fahrbetrieb - vorgesehen.

Die DE 102 39 143 A1 beschreibt eine Lenkhelfvorrichtung für ein Fahrzeug mit einem Drehschieberventil und diesem zugeordnetem Lenkzylinder. Ein in den Hydraulikkreislauf der hydraulischen Lenkhelfvorrichtung eingeknüpftes Regelventil steuert bedarfsabhängig einen Volumenstrom eines Druckmittels.

Die EP 1 304 276 A1 beschreibt ein Lenksystem für ein Fahrzeug, und ein Verfahren zum Betrieb des Lenksystems, mit einer Einrichtung zur Änderung des Lenkwinkelverhältnisses zwischen einem an einer Lenkhandhabe eingegebenen Lenkwinkel und einem Lenkwinkel eines lenkbaren Rades des Kraftfahrzeuges. Die Einrichtung zu Änderung des Lenkwinkelverhältnisses umfaßt einen elektrischen Servomotor, der ein Überlagerungsgetriebe in einer Lenkwelle antreibt. Steigt die Temperatur des Servomotors wird bei zunehmender Fahrgeschwindigkeit des Fahrzeugs das Lenkwinkelverhältnis verkleinert und umgekehrt. Von einer Steuereinrichtung wird dazu mit einem Drehzahlsensor die Drehzahl eines Rades und mit einem Lenkwinkelsensor die Lenkgeschwindigkeit und der Lenkwinkel an einer Lenkhandhabe des Fahrzeugs erfasst.

Die bekannten Lenksysteme oder Servolenksysteme berücksichtigen ein grundsätzlich bei der Rückwärtsfahrt eines Fahrzeuges geändertes Fahrverhalten im Vergleich zu Vorwärtsfahrt des Fahrzeuges nicht.

Der Erfindung liegt die Aufgabe zugrunde, ein Lenksystem für ein Fahrzeug anzugeben, das weniger empfindlich auf Lenkwinkeländerungen an der Lenkhandhabe bei Rückwärtsfahrt reagiert und ein leichtes und sicheres Lenken eines Fahrzeugs bei Rückwärtsfahrt ermöglicht.

Die Aufgabe wird mit einem Lenksystem mit den Merkmalen des Anspruchs 1 gelöst.

Dadurch dass der Steuereinrichtung oder der Einrichtung zur Änderung des Lenkwinkelverhältnisses oder des Unterstützungslenkmoments ein Signal eines die Fahrtrichtung des Fahrzeuges, insbesondere die Rückwärtsfahrt angebenden Fahrtrichtungssensors zugeführt ist und durch die Steuereinrichtung verarbeitet wird, kann das Lenkwinkelverhältnis bei Rückwärtsfahrt des Kraftfahrzeugs mit der Steuereinrichtung und der vorzugsweise einen Aktuator und einen Abtrieb umfassende Einrichtung zur Änderung des Lenkwinkelverhältnisses oder das Unterstützungslenkmoment des Lenkaktuators geregelt werden.

Bevorzugte Ausführungen ergeben sich aus den Unteransprüchen.

Das Lenkwinkelverhältnis wird bei Rückwärtsfahrt des Fahrzeugs größer eingestellt als bei Vorwärtsfahrt des Fahrzeuges. Dadurch werden relativ große Lenkwinkeländerungen oder Ausschläge an der Lenkhandhabe in kleine Lenkwinkel des gelenkten Rades oder der gelenkten Räder des Fahrzeugs umgesetzt.
Das Unterstützungslenkmoment des Lenkaktuators kann bei Rückwärtsfahrt des Fahrzeugs reduziert sein, sodaß die Lenkung für einen Fahrer schwergängiger wird.

Bevorzugt wird das Lenkwinkelverhältnis und/oder das Unterstützungslenkmoment von der Einrichtung zur Änderungs des Lenkwinkelverhältnisses und der Steuereinrichtung in Abhängigkeit von der Fahrgeschwindigkeit des Fahrzeugs und der Lenkgeschwindigkeit an der Lenkhandhabe gesteuert. Bei hoher Fahrgeschwindigkeit bei Rückwärtsfahrt wird das Lenkwinkelverhältnis groß, sodaß auch schnelle Rückwärtsfahrt ohne die Gefahr, das Fahrzeug durch einen bei der Vorwärtsfahrt üblichen Lenkwinkelausschlag an der Lenkhandhabe zu verreisen, möglich ist. Das Unterstützungslenkmoment wird klein. Bei geringer Fahrgeschwindigkeit und bei großen Lenkgeschwindigkeiten oder großen Lenkwinkeln, eingegeben an der Lenkhandhabe, wie dies beim Einparken oder Rangieren des Fahrzeugs der Fall ist, wird das Lenkwinkelverhältnis klein, d.h. das Lenksystem arbeitet sehr direkt und setzt Ausschläge der Lenkhandhabe in große Lenkwinkeländerungen des gelenkten Rades um oder das Unterstützungslenkmoment des Lenkaktuators wird relativ groß gewählt.

Die Steuereinrichtung für die Einrichtung zur Änderung des Lenkwinkelverhältnisses berechnet nach Maßgabe der Signale des Fahrtrichtungssensors, welcher mit einer Gang- oder Fahrstufenwählvorrichtung oder mit einem Rad des Fahrzeugs wirkverbunden ist, nach Maßgabe der Signale des Lenkwinkelsensors, der die Höhe der Sollwerteingabe oder der Lenkwinkeleingabe an der Lenkhandhabe und deren zeitliche Änderung misst und nach Maßgabe des Drehzahlsensors der die Fahrgeschwindigkeit des Fahrzeugs anhand der Drehzahl eines Rades des Fahrzeugs oder anhand der Kurbelwellendrehzahl und der eingestellten Fahrstufe ermittelt, einen Soll - Lenkwinkel für das gelenkte Rad oder die gelenkten Räder des Fahrzeugs. Dazu kann die Steuereinrichtung Signale einer Einrichtung zu Kontrolle des Betriebs der Einrichtung zu Änderung des Lenkwinkelverhältnisses verarbeiten, wobei überprüft wird, ob das vorgegebene Lenkwinkelverhältnis eingestellt ist. Das Lenkwinkelverhältnis wird von der Steuereinrichtung, die Teil einer elektronischen Stabilisierungseinrichtung des Fahrzeug oder einer Motorsteuerung sein kann, nach Maßgabe der genannten Sensorsignale aus einer Kennlinie, einer Kennlinienschar oder eines Kennfeldes, welche die Abhängigkeit des Lenkwinkelverhältnisses von der Fahrgeschwindigkeit, des Lenkwinkels und der Lenkgeschwindigkeit an der Lenkhandhabe und weiterer Parameter festlegen und in einem Speicher abgelegt sind, bestimmt.

Es kann zweckmäßig sein, der Steuereinrichtung über eine Eingabeeinrichtung für den Fahrer des Fahrzeugs verschiedene, vorwählbare Kategorien von Lenkwinkelverhältnissen oder Unterstützungslenkmomenten vorzugeben und damit eine individuelle, gewünschte Einstellung der Empfindlichkeit des Lenksystems bei Rückwärtsfahrt und bei Parkier- oder Rangiervorgängen zu wählen und festzulegen.

Das Lenksystem mit der Einrichtung zur Änderung des Lenkwinkelverhältnisses kann ein mechanisches Lenksystem mit einer mechanischen Wirkverbindung der Lenkhandhabe über eine Lenkwelle mit einem Lenkgetriebe und einer getrieblichen Verbindung des Lenkgetriebes mit dem gelenkten Rad oder den gelenkten Rädern des Fahrzeugs sein. Die Einrichtung zur Änderung des Lenkwinkelverhältnisses kann dabei im wesentlichen aus einem Aktuator, der von der Steuereinrichtung angesteuert wird, welcher elektrisch betrieben sein kann und aus einem mehrgliedrigen Gelenkgetriebe oder einem Kurvengetriebe oder einem Wälzkurvengetriebe in der Lenkwelle gebildet sein, wie dies beispielsweise der DE 41 29 731 C2 entnehmbar ist. Die Einrichtung zur Änderung des Lenkwinkelverhältnisses kann koaxial zu der Lenkwelle in dieser eingeknüpft sein oder auch in der von Spurstangen, Lenkzwischenstangen und Radlenkhebeln gebildeten getrieblichen Verbindung des Lenkgetriebes mit dem gelenkten Rad angeordnet sein und beispielsweise eine Schubbewegung differenzieren.

Zusätzlich zu der mechanischen Wirkverbindung der Lenkhandhabe mit dem gelenkten Rad, oder anstatt der mechanischen Wirkverbindung kann das Lenksystem als hydraulisches Hilfskraft- oder Fremdkraftlenksystem (Zahnstangen- Hydrolenkung, Kugelmutterumlauf-Hydrolenkung) aufgebaut sein und mit der Einrichtung zur Änderung des Lenkwinkelverhältnisses oder zur Änderung des Unterstützungslenkmoments und der Steuereinrichtung für diese ausgebildet sein. Die Änderung des Lenkwinkelverhältnisses wird durch die Ansteuerung eines Bypasses mit variabler Ablaufdrossel oder mit einem Strombegrenzungsventil oder durch eine Übersteuerung des Druckmittelförderstromes eines Lenkventils durch einen Drehmomentstellmotor an einem Lenkventil oder durch die Regelung des Hubes oder der Fördermenge einer verstellbaren Hydropumpe des hydraulischen Lenksystems bewirkt werden. Es kann zweckmäßig sein, den Druckmittel - Förderstrom des hydraulischen Lenksystems über ein Regelventil, das den Druckmittel - Förderstrom einer Hydropumpe in Teilströme aufteilt, die teilweise den Druckmittel - Förderstrom zu einem Lenkaktuator kurzschließen, zu steuern.

Die Einrichtung zur Änderung des Lenkwinkelverhältnisses oder zur Änderung des Unterstützungslenkmoments lässt sich mit einem elektrischen Servolenksystem verbinden, wobei Steuereinrichtungen des elektrischen Servolenksystems zur Ansteuerung der Einrichtung zur Änderung des Lenkwinkelverhältnisses oder zur Änderung des Unterstützungslenkmoments herangezogen werden können. Ein elektrischer Lenkaktuator der elektrischen Servolenkung kann beispielsweise als bürstenloser Dreiphasenmotor, der von der Steuereinrichtung über eine Ansteuerschaltung gesteuert wird, gebildet sein. Die Ansteuerschaltung kann in an sich bekannter Weise eine Transistor- Brückenschaltung sein. Die Steuereinrichtung für die Einrichtung zur Änderung des Lenkwinkelverhältnisses umfaßt einen Microcomputer mit einer Zentraleinheit (CPU), einen Arbeitsspeicher (RAM), einen Festwertspeicher (ROM), in dem die genannten Kennlinien, Kennlinienscharen oder Kennfelder und das Betriebssystem für die CPU gespeichert sind. Eine CAN-Busverbindung verbindet alle Komponenten des Lenksystems , wie Speicher, CPU, Sensoren, Lenkaktuator und Stromsensoren und Rotor - Positionssensoren des elektrischen Lenkaktuators. Die Steuereinrichtung steuert den elektrischen Lenkaktuator auf der Grundlage der Lenkwinkelsensordaten, der Stromdaten, der Daten des Fahrtrichtungssensors und des Drehzahlsensors bzw. Fahrgeschwindigkeitssensors. Die Steuereinrichtung umfasst somit einen Betriebsteil für die Berechung der Lenkgeschwindigkeit und eine Soll - Drehzahl - Einstelleinheit für die Soll - Drehzahl des Rotors des elektrischen Lenkaktuators auf Grundlage der Lenkwinkelsensor - Daten und der Drehzahlsensor - Daten.

Der elektrische Lenkaktuator kann auf ein Überlagerungsgetriebe an der Lenkwelle des Lenksystems wirken oder direkt, auch im Sinne eines steer-by-wire-Lenksystems, auf ein Lenkgetriebe wirken.

Die Erfindung wird nun näher anhand eines Ausführungsbeispieles beschrieben und anhand der beiliegenden Zeichnung wiedergegeben.

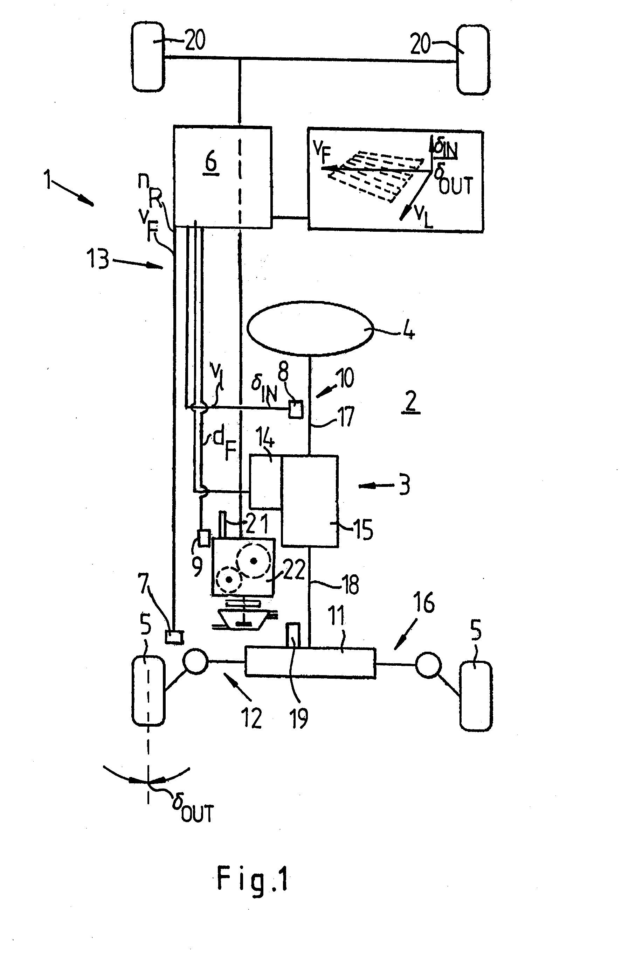

Fig. 1 zeigt eine schematische Ansicht eines erfindungsgemäßen Lenksystems.

In Figur 1 ist eine schematische Ansicht eines Lenksystems 1, das als elektrisches Servolenksystem 13 für ein Fahrzeug 2 aufgebaut ist, gezeigt. Das elektrische Servolenksystem 13 ist mit einer Einrichtung 3 zur Änderung des Verhältnisses eines an einer Lenkhandhabe 4 eingegebenen Lenkwinkels δ_{IN} zu einem an gelenkten Rädern 5 an einer Vorderachse 16 des Fahrzeugs 2 eingenommen Lenkwinkel δ_{OUT} ausgestattet. Die Einrichtung 3 zur Änderung des Lenkwinkelverhältnisses δ_{IN}/δ_{OUT} ist aus einem Überlagerungsgetriebe 15, welches in eine Lenkwelle 10 zwischen der Lenkhandhabe 4 und einem Lenkgetriebe 11 eingesetzt ist, und einem elektrischen Lenkaktuator 14 zum Antrieb des Überlagerungsgetriebes 15, gebildet. Mit dem Überlagerungsgetriebe 15 ist es möglich, eine Eingangswelle 17 relativ zu einer Ausgangswelle 18 der Lenkwelle 10 zu verdrehen. Die Ausgangswelle 18 treibt über ein Ritzel eine Zahnstange des Lenkgetriebes 11 an. Auf die Zahnstange kann ein weiterer elektrischer Aktuator 19, der mit dem elektrischen Lenkaktuator 14 von einer elektronischen Steuereinrichtung 6 angesteuert ist, wirken. Das Unterstützungslenkmoment des weiteren Aktuators 19 wird bei Rückwärtsfahrt in Abhängigkeit von der Lenkgeschwindigkeit und der Fahrgeschwindigkeit im Vergleich zur Vorwärtsfahrt verringert.

Das Lenkgetriebe 11 treibt über eine durch Spurstangen und Radlenkhebel in bekannter Weise gebildete getriebliche Verbindung 12 die lenkbaren Räder 5 zu deren Lenkwinkelverstellung an.

Die Steuereinrichtung 6 ist signalübertragend mit einem Drehzahlsensor 7 an einem Rad 20 des Fahrzeugs 2 zur Messung der Fahrgeschwindigkeit v_{F}, mit einem Lenkwinkelsensor 8 an der Lenkhandhabe 4, mit einem Fahrtrichtungssensor 9 an einem Fahrstufenwählhebel 21 eines Fahrantrieb - Getriebes 22 des Fahrzeugs 2, mit einem Stromsensor für den elektrischen Lenkaktuator 14 und mit einem Rotordrehzahlsensor für den elektrischen Lenkaktuator 14 verbunden.

Der elektrische Lenkaktuator 14 besteht aus einem bürstenlosen Dreiphasen-Elektromotor und einem Abtrieb und wird von der elektronischen Steuereinrichtung 6 über eine Ansteuerschaltung gesteuert. Die Ansteuerschaltung ist als an sich bekannte Leistungstransistoren - Brückenschaltung aufgebaut. Die elektronische Steuereinrichtung 6 schließt einen Microcomputer ein, der im wesentlichen aus einer CPU, einem Arbeitsspeicher RAM, einem Festwertspeicher ROM mit einem abgespeicherten Betriebsprogramm zur Einstellung und Änderung des Lenkwinkelverhältnisses aufgebaut ist. Ein CAN - Bussystem verbindet alle Sensoren und den elektrischen Lenkaktuator 14 miteinander.

Der elektrischen Steuereinrichtung 6 werden Signale des Lenkwinkelsensors 8, wie die Lenkgeschwindigkeit v_{L} und der an der Lenkhandhabe 4 eingegebene Lenkwinkel δ_{IN} zugeführt. Die Drehzahl n_{R} des Rades 20, die zur Berechnung der Fahrgeschwindigkeit des v_{F} dient, das Signal d_{F} des Fahrtrichtungssensors 9 aufgrund der Stellung des Fahrstufenwählhebels 21, sowie Signale über die Rotordrehzahl und Rotorwinkel des elektrischen Lenkaktuators 14 und der aktuelle Strom zu dem elektrischen Lenkaktuator 14 zugeführt und in einem Lenkgeschwindigkeits - Betriebsteil und in einem Rotor- Ansteuerungs - Steuerteil zur Drehzahlsteuerung des elektrischen Lenkaktuators 14 verarbeitet.

In dem Festwertspeicher ROM der Steuereinrichtung 6 sind Kennfelder, die die Abhängigkeit des Lenkwinkelverhältnisses von der Fahrgeschwindigkeit v_{F} und der Lenkgeschwindigkeit v_{L} bei Rückwärtsfahrt des Fahrzeugs 2 festlegen, abgelegt. Vorzugsweise ist das Lenkwinkelverhältnis bei Rückwärtsfahrt größer als bei Vorwärtsfahrt um die Bedienung des Fahrzeugs 2 zu vereinfachen und das Fahrzeug bei Rückwärtsfahrt nicht zu sensibel in Bezug auf das Ansprechen des Lenksystems 1 zu gestalten. Mit zunehmender Fahrgeschwindigkeit bei Rückwärtsfahrt wird das Lenkwinkelverhältnis größer, d.h. die Änderung des Lenkwinkels an den gelenkten Rädern 5 bei Eingabe eines Lenkwinkels an der Lenkhandhabe 4 wird kleiner; das Fahrzeug 2 läßt sich ähnlich wie bei der Vorwärtsfahrt stabiler lenken.

Bei kleiner Rückwärtsfahrt - Fahrgeschwindigkeit, wird das Lenkwinkelverhältnis kleiner, d.h. insbesondere beim langsamen Parkier- oder Rangierbetrieb rückwärts wirkt das Lenksystem direkt. Dies wird unterstützt durch ein kleines Lenkwinkelverhältnis bei großen Lenkgeschwindigkeiten und bei kleiner Fahrgeschwindigkeit.

## Patentansprüche

1. Lenksystem für ein Fahrzeug (2), insbesondere für ein Kraftfahrzeug, mit einer Einrichtung (3) zur Änderung des Lenkwinkelverhältnisses (δ_{IN}/δ_{OUT}) zwischen einem, an einer Lenkhandhabe (4) eingegebenen Lenkwinkel (δ_{IN}) und einem Lenkwinkel (δ_{OUT}) eines lenkbaren Rades (5) oder einer Einrichtung zur Änderung des Unterstützungslenkmoments eines Lenkaktuators, und mit einer Steuereinrichtung (6) für die Einrichtung (3) zur Änderung des Lenkwinkelverhältnisses (δ_{IN}/δ_{OUT}) oder des Unterstützungslenkmoments, wobei die Steuereinrichtung (6) Signale (n_{R}) eines Drehzahlsensors (7) an einem Rad des Fahrzeugs (2) oder eines Fahrgeschwindigkeitssensors und Signale (δ_{IN}) eines Lenkwinkelsensors (8) an der Lenkhandhabe (4) verarbeitet, **dadurch gekennzeichnet, dass** durch die Steuereinrichtung (6) der Einrichtung (3) zur Änderung des Lenkwinkelverhältnisses (δ_{IN}/δ_{OUT}) oder des Unterstützungslenkmoments ein Signal (d_{F}) eines Fahrtrichtungssensors (9) verarbeitet ist und das Lenkwinkelverhältnis (δ_{IN}/δ_{OUT}) und/oder das Unterstützungslenkmoment des Lenkaktuators bei Rückwärtsfahrt des Fahrzeugs (2) geregelt ist.

2. Lenksystem nach Anspruch 1, **dadurch gekennzeichnet, dass** das Lenkwinkelverhältnis (δ_{IN}/δ_{OUT}) durch die Einrichtung (3) zur Änderung des Lenkwinkelverhältnisses (δ_{IN}/δ_{OUT}) bei Rückwärtsfahrt größer eingestellt ist als bei Vorwärtsfahrt des Fahrzeugs (2) oder das Unterstützungslenkmoment des Lenkaktuators verringert ist.

3. Lenksystem nach einem der Ansprüche 1 oder 2, **dadurch gekennzeichnet, dass** das Lenkwinkelverhältnis (δ_{IN}/δ_{OUT}) oder das Unterstützungslenkmoment in Abhängigkeit von der Fahrgeschwindigkeit (v_{F}) des Fahrzeugs (2) und/oder der Lenkgeschwindigkeit (v_{L}) an der Lenkhandhabe (4) von der Steuereinrichtung (6) für die Einrichtung (3) zur Änderung des Lenkwinkelverhältnisses (δ_{IN}/δ_{OUT}) oder des Unterstützungslenkmoments gesteuert ist.

4. Lenksystem nach Anspruch 3, **dadurch gekennzeichnet, dass** das Lenkwinkelverhältnis (δ_{IN}/δ_{OUT}) mit zunehmender Fahrgeschwindigkeit (v_{F}) bei Rückwärtsfahrt des Fahrzeugs (2) zunimmt oder das Unterstützungslenkmoment abnimmt.

5. Lenksystem nach Anspruch 3 oder 4, **dadurch gekennzeichnet, dass** das Lenkwinkelverhältnis (δ_{IN}/δ_{OUT}) bei abnehmender Fahrgeschwindigkeit (v_{F}) des Fahrzeugs (2) und hoher Lenkgeschwindigkeit (v_{L}) an der Lenkhandhabe (4) abnimmt oder das Unterstützungslenkmoment zunimmt.

6. Lenksystem nach einem der Ansprüche 1 bis 5, **dadurch gekennzeichnet, dass** das Lenkwinkelverhältnis (δ_{IN}/δ_{OUT}) oder das Unterstützungslenkmoment in einem Kennfeld in der Steuereinrichtung (6) oder in einem anderen Speicher des Fahrzeugs (2) gespeichert ist.

7. Lenksystem nach einem der Ansprüche 1 bis 6, **dadurch gekennzeichnet, dass** das Lenkwinkelverhältnis (δ_{IN}/δ_{OUT}) oder das Unterstützungslenkmoment von einem Fahrer des Fahrzeugs (2) aus verschiedenen, in dem Fahrzeug (2) abgespeicherten Kategorien vorwählbar ist.

8. Lenksystem nach einem der Ansprüche 1 bis 7, **dadurch gekennzeichnet, dass** das Lenksystem (1) eine Lenkwelle (10) und ein Lenkgetriebe (11) zur mechanischen Wirkverbindung der Lenkhandhabe (4) mit dem gelenkten Rad (5) aufweist.

9. Lenksystem nach einem der Ansprüche 1 bis 8, **dadurch gekennzeichnet, dass** die Einrichtung (3) zur Änderung des Lenkwinkelverhältnisses (δ_{IN}/δ_{OUT}) von einem mehrgliedrigen Gelenkgetriebe oder einem Kurvengetriebe oder einem Wälzkurvengetriebe in der Lenkwelle (10) oder in der getrieblichen Verbindung (12) zwischen dem Lenkgetriebe (11) und dem gelenkten Rad (5) und aus einem Antrieb für die Getriebe gebildet ist.

10. Lenksystem nach einem der Ansprüche 1 bis 9, **dadurch gekennzeichnet, dass** das Lenksystem (1) ein hydraulisches Servolenksystem ist.

11. Lenksystem nach Anspruch 10, **dadurch gekennzeichnet, dass** durch die Einrichtung (3) zur Änderung des Lenkwinkelverhältnisses (δ_{IN}/δ_{OUT}) oder des Unterstützungslenkmoments in dem hydraulischen Lenksystem ein Druckmittel - Förderstrom einer Hydropumpe für einen hydraulischen Lenkaktuator mit Hilfe von Druck- und/oder Durchflußsensoren und eines Bypasses mit variabler Ablaufdrossel und/oder einem Strombegrenzungsventil und/oder mit einem Drehmomentstellmotor an einem Lenkventil und/oder durch eine Regelung des Hubes der Hydropumpe so geregelt ist, dass bei Rückwärtsfahrt die Stellkraft des hydraulischen Lenkaktuators verringert ist.

12. Lenksystem nach einem der Ansprüche 1 bis 9, **dadurch gekennzeichnet, dass** das Lenksystem (1) ein elektrohydraulisches Servolenksystem ist und durch die Einrichtung (3) zur Änderung des Lenkwinkelverhältnisses (δ_{IN}/δ_{OUT}) oder des Unterstützungslenkmoments ein Elektromotor zum Antrieb der Hyropumpe des Lenksystems (1) in seiner Drehzahl geregelt ist.

13. Lenksystem nach einem der Ansprüche 1 bis 9, **dadurch gekennzeichnet, dass** das Lenksystem (1) ein elektrisches Servolenksystem (13) ist und die Einrichtung (3) zur Änderung des Lenkwinkelverhältnisses (δ_{IN}/δ_{OUT}) oder des Unterstützungslenkmoments über die Steuereinrichtung (6) einen elektrischen Lenkaktuator (14) ansteuert.

14. Lenksystem nach Anspruch 13, **dadurch gekennzeichnet, dass** der elektrische Lenkaktuator (14) auf ein Überlagerungsgetriebe (15) an der getrieblichen Verbindung zwischen der Lenkhandhabe (4) und dem gelenkten Rad (5) wirkt.

15. Lenksystem nach Anspruch 13, **dadurch gekennzeichnet, dass** der elektrische Lenkaktuator direkt auf das Lenkgetriebe (11) wirkt.

16. Lenksystem nach Anspruch 13, **dadurch gekennzeichnet, dass** das elektrische Servolenksystem (13) ein steer- by - wire - Lenksystem ist.

17. Lenksystem nach einem der Ansprüche 1 bis 16, **dadurch gekennzeichnet, dass** die Einrichtung (3) zur Änderung des Lenkwinkelverhältnisses (δ_{IN}/δ_{OUT}) oder des Unterstützungslenkmoments über ein CAN - Bussystem mit den Komponenten des Lenksystems (1) kommuniziert.
